# EUROPÄISCHE PATENTSCHRIFT

(11) **EP 4 313 653 B1**
(45) Veröffentlichungstag und Bekanntmachung des Hinweises auf die Patenterteilung: **17.06.2026**
(21) Anmeldenummer: 22703935.1
(22) Anmeldetag: 07.02.2022
(51) Int. Cl.: B60K 28/06, B60W 40/08, G01C 21/36, G01C 21/34, G08B 25/01, B60W 50/14, B60W 60/00

(54) **VERFAHREN ZUM BETREIBEN EINES FAHRZEUGS MIT NOTRUFEINRICHTUNG IN EINEM NOTFALLMODUS UND NOTRUFEINRICHTUNG FÜR EIN FAHRZEUG**
METHOD FOR OPERATING A VEHICLE HAVING AN EMERGENCY CALL DEVICE IN AN EMERGENCY MODE, AND EMERGENCY CALL DEVICE FOR A VEHICLE
PROCÉDÉ POUR FAIRE FONCTIONNER UN VÉHICULE ÉQUIPÉ D'UN DISPOSITIF D'APPEL D'URGENCE EN MODE D'URGENCE, ET DISPOSITIF D'APPEL D'URGENCE POUR UN VÉHICULE

(30) Priorität: 25.03.2021 DE 102021202946
(43) Veröffentlichungstag der Anmeldung: 07.02.2024
(73) Patentinhaber: VOLKSWAGEN AKTIENGESELLSCHAFT, 38440 Wolfsburg (DE)
(72) Erfinder: SCHMÄLING, Jan, 34346 Hann. Münden (DE); RANG, Oliver, 34132 Kassel (DE); ZIMMERMANN, Matthias, 34414 Warburg (DE)
(86) Internationale Anmeldenummer: PCT/EP2022/052823
(87) Internationale Veröffentlichungsnummer: WO 2022/199920

(56) Entgegenhaltungen:
- DE-A1- 102016 218 382
- US-A1- 2015 066 284
- US-A1- 2019 359 056

## Beschreibung

Die vorliegende Erfindung bezieht sich auf ein Verfahren zum Betreiben eines, insbesondere wenigstens teilweise autonom und bevorzugt autonom betreibbaren und/oder betriebenen, Fahrzeugs mit einer Notrufeinrichtung in einem Notfallmodus des Fahrzeugs. Die vorliegende Erfindung bezieht sich ferner auf eine Notrufeinrichtung für ein Fahrzeug zum Betrieb in einem Notfallmodus. In dem Notfallmodus ist das Fahrzeug wenigstens zeitweise in Kommunikationsverbindung mit einer Notrufzentrale bzw. wenigstens zeitweise ist eine Kommunikationsverbindung zwischen einer Notrufzentrale und der Notrufeinrichtung und/oder dem Fahrzeug herstellbar. Weiterhin ist bevorzugt in dem Notfallmodus ein vorgegebenes Rettungsziel als Navigationsziel vorgegeben.

Das autonome Fahren bringt in der aktuellen Zeit viele Neuerungen mit sich. So sind in den Phasen des autonomen Fahrens von Stufe 1 noch volle Aufmerksamkeit und Kontrolle des Fahrers nötig bis hin zu Phase 5, wo das Fahrzeug weder Lenkrad noch Pedale benötigt, bereits realisiert oder in Entwicklung. Je autonomer das Fahrzeug ist, desto weniger Aktionen oder Berührungspunkte hat der Fahrer mit der Tätigkeit fahren selbst.

Durch die immer älter werdende Gesellschaft kann bereits heute nicht ausgeschlossen werden, dass während der Fahrt ein medizinischer Notfall auftritt.

Doch ist es das Ziel, autonom fahren zu können und aufgrund eines medizinischen Notfalls verstorben am Ende der Fahrt anzukommen? Nur weil das Fahrzeug einfach tut, was es soll?

Aus dem Stand der Technik sind zwar EKG-Funktionen im Fahrersitz bekannt, dem Fahrer wird aber nicht aktiv geholfen in medizinischen Notfall-Situationen.

Selbst eine Änderung der Route während dem autonomen Fahren zum nächstgelegenen Krankenhaus bzw. zur nächstgelegenen Klinik kann unter Umständen zu spät sein.

Aus dem Stand der Technik sind elektrische Notrufsysteme, sogenannte "eCall" (Emergency Call)-Systeme, in einer Vielzahl von modernen Kraftfahrzeugen bekannt, mit welchen bei einem Unfall oder einer anderen Notfallsituationen ein Notruf an eine Notrufzentrale vorgenommen werden kann.

Aus der US 2018/0333093 A1 ist ein Verfahren für ein Fahrzeug mit einem autonomen Fahrzeugsteuerungssystem bekannt. Dabei kann ein Sensor in dem Fahrzeugsitz biometrische Daten einer auf dem Fahrzeugsitz sitzenden Person detektieren. Weiterhin wird basierend auf den biometrischen Daten der Person bestimmt, ob die Person unmittelbar medizinische Unterstützung benötigt. In einem solchen Fall wird das autonome Fahrzeugsteuerungssystem dazu benutzt, das Fahrzeug zu einer medizinischen Einrichtung zu fahren.

Aus der US 2019/0359056 A1 ist bekannt, dass ein autonomes Fahrzeug das Fahrzeug während eines medizinischen Notfalls beispielsweise zu einem Krankenhaus umleiten kann.

In der US 2019/0359220 A1 ist beschrieben, dass ein autonomes Kraftfahrzeug im Falle eines auftretenden medizinischen Notfalls bei einem Insassen die Route sowie das Fahrziel ändert und das nächstgelegene Krankenhaus mit Notfalldienst aufsucht.

In der DE 10 2016 218 382 A1 ist ein Verfahren zum autonomen Fahrtbetrieb eines Fahrzeugs beschrieben, in welchem eine Notfallsituation durch eine Fahrzeugsteuerung auf Basis von Messwerten von Sensoren erkannt wird und ein Notfallziel und eine Fahrtroute dorthin durch die Fahrzeugsteuerung oder eine Verkehrsregelungsautorität bestimmt wird. Um das Notfallziel potentiell in kürzerer Zeit erreichen zu können, kann eine Freigabe zur Aufhebung wenigstens einer bestehenden regulatorischen Fahrtrestriktion erteilt werden.

Aus der US 2017/0090475 A1 ist bekannt, dass eine tragbare Einrichtung Biosignalsensoren und dergleichen aufweisen kann, mittels welchem erkannt werden kann, ob sich der Fahrer in einem schläfrigen Zustand befindet. Eine Fahrerüberwachungsvorrichtung kann den Fahrer aufwecken oder ein Warnsignal übermitteln um die anderen Fahrzeuge um das Fahrzeug zu warnen.

Aus der US 2018/0056784 A1 ist ein Verfahren für außergewöhnliche meteorologische Ereignisse wie schwerer Nebel oder ein Sandsturm zur Steuerung eines Motorrads bekannt. In diesem kann ein hierfür vorgesehenes System den Fahrer des Motorrads sicher zur nächstgelegenen Parkmöglichkeit leiten.

Aus der US 2018/0120837 A1 ist ein Verfahren bekannt, in welchem biophysikalische Sensoren biophysikalische Werte eines Fahrers erfassen und überwachen, um einen plötzlich auftretenden medizinischen Notfall des Fahrers eines Fahrzeugs zu erkennen. In einem solchen Fall kann ein Notfallplan ausgeführt werden, gemäß dem beispielsweise das Fahrzeug evakuiert werden kann oder das Fahrzeug an einem sicheren Platz abgestellt werden kann.

Aus der US 2018/0348759 A1 ist die Verwendung eines tragbaren medizinischen Geräts in einem Fahrzeug bekannt. Das tragbare medizinische Gerät kann dabei selbst erkennen, dass es in einem autonomen Fahrzeug verwendet wird und zudem die Rolle des Trägers im Fahrzeug bestimmen. Im Fall eines auftretenden Notfalls, kann das tragbare medizinische Gerät die Steuerung des autonomen Fahrsteuerungssystem des Fahrzeugs übernehmen.

Aus der US 2015/066284 A1 ist ein Verfahren bekannt, bei dem zunächst der Zustand eines Fahrers eines Fahrzeuges bestimmt wird. Wir eine Beeinträchtigung (medizinischer Notfall, Trunkenheit, Drogen, Müdigkeit) festgestellt, so wird ein automatischer Vorgang eingeleitet. Ein solcher Vorgang kann dabei das autonome Heranfahren an den Straßenrand und Stoppen des Fahrzeugs, das Heranfahren an den Straßenrand und Warten auf Hilfe (Polizei, Krankenwagen, etc.), das Fahren zu einem Treffpunkt mit einem Krankenwagen oder das Fahren zu einem Krankenhaus umfassen.

Der vorliegenden Erfindung liegt die Aufgabe zugrunde, die aus dem Stand der Technik bekannten Nachteile zu überwinden und im Falle eines während einer Fahrt auftretenden medizinischen Notfalls bei einem Insassen des Fahrzeugs den Insassen möglichst schnell mit medizinische Unterstützung zu versorgen und eine Hilfszeit bzw. die Zeit bis zur medizinischen Behandlung möglichst weitgehend zu verkürzen.

Die Aufgabe wird erfindungsgemäß durch die Gegenstände der unabhängigen Ansprüche gelöst. Vorteilhafte Ausführungsformen und Weiterbildungen der Erfindung sind Gegenstand der Unteransprüche.

Bei einem erfindungsgemäßen Verfahren zum Betreiben, insbesondere zum (wenigstens teilautonomen und bevorzugt zum vollautonomen und/oder automatischen) Steuern, eines, insbesondere wenigstens teilweise autonom und bevorzugt autonom betreibbaren und/oder betriebenen, Fahrzeugs mit einer Notrufeinrichtung in einem Notfallmodus des Fahrzeugs, ist das Fahrzeug in dem Notfallmodus wenigstens zeitweise in Kommunikationsverbindung mit einer Notrufzentrale und weist als Navigationsziel ein vorgegebenes Rettungsziel auf und/oder steuert das vorgegebenen Rettungsziel als Navigationsziel an.

Erfindungsgemäß erfolgt zwischen dem Fahrzeug und insbesondere der Notrufeinrichtung des Fahrzeugs und der Notrufzentrale ein Austausch von Routendaten, welche für eine Navigationsroute von einem, insbesondere aktuellen, Standort des Fahrzeugs zum Rettungsziel charakteristisch sind. Bevorzugt sind die Routendaten für wenigstens einen Abschnitt der Navigationsroute charakteristisch. Besonders bevorzugt sind die Routendaten für wenigstens die vollständige Navigationsroute zwischen einem, insbesondere aktuellen, Standort (oder Standort, an welchem ein Notruf mittels der Notrufeinrichtung abgesetzt wurde) und dem Rettungsziel charakteristisch. Bevorzugt betrifft das Verfahren eine Gesundheitsüberwachung des Nutzers, insbesondere des Fahrers, während dem autonomen Fahren und eine Reaktion des Fahrzeugs bei medizinischen Notfällen (insbesondere eines Nutzers).

Bevorzugt übermittelt das Fahrzeug und insbesondere die Notrufeinrichtung des Fahrzeugs die für wenigstens einen Abschnitt und bevorzugt vollständige Navigationsroute charakteristischen Routendaten an die Notrufzentrale.

Mit anderen Worten findet ein Informationsaustausch zwischen der Notrufzentrale und dem Fahrzeug und insbesondere der Notrufeinrichtung des Fahrzeugs bezüglich der von dem Fahrzeug zum Rettungsziel zu nehmenden und/oder ausgewählten und/oder ermittelten Fahrroute statt. Dies bietet den Vorteil, dass der Notrufzentrale die (genaue) Fahrroute, entlang welcher das Fahrzeug von dem aktuellen Standpunkt (im Wesentlichen zum Zeitpunkt des Absetzen des Notrufs) fahren wird und/oder geführt wird und/oder gesteuert wird, bekannt ist. Dies wiederum kann die Notrufzentrale nutzen, und eine in der Nähe der Fahrroute befindliches Einsatzfahrzeug und/oder Rettungsmittel zu informieren, um zu dem auf dem Weg zum Rettungsziel befindlichen Fahrzeug zu gelangen.

Unter einer Notrufzentrale ist bevorzugt eine Rettungsleitstelle und/oder eine Notrufstelle zu verstehen.

Unter einem Notfallmodus (des Fahrzeugs und/oder der Notrufeinrichtung) ist insbesondere ein Betriebsmodus der Notrufeinrichtung und/oder des Fahrzeugs zu verstehen, welcher bei Auftreten einer Notfallsituation, insbesondere einer medizinischen Notfallsituation besonders bevorzugt in Bezug auf einen Nutzer (beispielsweise den Fahrer des Fahrzeugs) aktiviert wird. Der Notfallmodus ist dabei manuell und/oder durch (eine insbesondere sprachbasierte und/oder gestenbasierte und/oder mittels physischer) Nutzereingabe, insbesondere durch den Nutzer und/oder einen weiteren Insassen und/oder Verkehrsbeteiligten, aktivierbar.

Bevorzugt ist der Notfallmodus (des Fahrzeugs und/oder der Notrufeinrichtung) durch Absetzen eines Notrufs an die Notrufzentrale mittels der Notrufeinrichtung aktivierbar und wird bevorzugt hierdurch aktiviert.

Bevorzugt wird der Notfallmodus automatisch durch die Notrufeinrichtung aktiviert, besonders bevorzugt, indem die Notrufeinrichtung automatisch und insbesondere ohne Einwirkung und/oder Beteiligung des Nutzers des Fahrzeugs (welcher sich in einer Notfallsituation befindet) einen Notruf absetzt und/oder eine Kommunikationsverbindung zur Notrufzentrale herstellt, um Notfalldaten mit der Notrufzentrale auszutauschen und/oder zu übermitteln.

Bevorzugt wird (im Rahmen des Absetzens eines Notrufs) wenigstens ein (Minimal-)Datensatz übermittelt, welcher zumindest den Notfallzeitpunkt, Koordinaten des Notfallorts und/oder aktuellen Standorts des Fahrzeugs, bevorzugt die Fahrtrichtung, eine Fahrzeug-ID, und einen Indikator, ob der Notruf automatisch oder manuell ausgelöst wurde, (oder wenigstens einen Teil der Daten hiervon) enthält.

Die Kommunikationsverbindung zwischen dem Fahrzeug und der Notrufzentrale kann dabei beispielsweise via ein Telefonnetz und/oder Internet und/oder per Inband und/oder via SMS und/oder via ein öffentliches Netzwerk (wie das Internet) und/oder via Satellitentelefonie hergestellt werden bzw. erfolgen. Dies bietet den Vorteil, dass vorhandene und insbesondere zuverlässige Schnittstellen genutzt werden können.

Bevorzugt werden die Notfalldaten von dem Fahrzeug, insbesondere von der Notrufeinrichtung des Fahrzeugs, an die Notrufzentrale über ein Kommunikationsnetz übertragen und/oder (allgemein, bevorzugt weitere bzw. andere) Daten über ein Kommunikationsnetz ausgetauscht, welches ausgewählt ist aus einer Gruppe, welche ein GSM-Netz, ein UMTS-Netz, ein 2G-Netz, ein 3G-Netz, ein EDGE-Netz, ein HSDPA-Netz, ein LTE-Netz, ein 5G-Netz und dergleichen umfasst.

Bevorzugt weist das Fahrzeug eine Vitalerfassungseinrichtung zur Erfassung von Vitalinformationen bzw. Vitaldaten des Nutzers (des Fahrers und/oder anderer Insassen) auf. Dabei kann die Vitalerfassungseinrichtung ausgewählt sein aus einer Gruppe von Erfassungseinrichtungen, welche Fitnesstracker (beispielsweise eine Smart Watch, deren Verbindung (mit dem Fahrzeug und/oder der Notrufeinrichtung) eingerichtet sein kann oder auch automatisch erfolgen kann), Puls- und weitere Daten aufzeichnende Geräte bzw. Sensoren, welche bevorzugt in den (Fahrzeug-)sitz(en) angeordnet sind (z.B. EKG-Sitz und/oder ein in den Fahrersitz integriertes, insbesondere kapazitives, Elektrokardiogramm-Messsystem), wenigstens eine visuelle Überwachungseinrichtung zur Überwachung der Insassen bzw. des Nutzers (beispielsweise Kamera, Laser, Thermokamera, ..), wenigstens ein Erfassungseinrichtung zur Erfassung des (biometrischen) Fahrerzustands, wenigstens einen Pulsfrequenzsensor, wenigstens ein insbesondere kamerabasiertes Nutzerüberwachungssystem zur Verfolgung der Blickrichtung des Nutzers, wenigstens ein kamerabasiertes System zur Messung einer Veränderung der Pupillen, wenigstens einen Atemfrequenzsensor, wenigstens einen EKG-und/oder EEG-Sensor, wenigstens einen Körpertemperatursensor, wenigstens einen Pulsoxymetersensor, wenigstens einen Atemgas-Sensor, wenigstens einen Sensor zur Ermittlung der Reaktions- und/oder Handlungsfähigkeit des Insassen und dergleichen sowie Kombinationen hiervon umfasst.

Beispiele für Sensoren zur Messung und/oder Verwendung von Vitaldaten zur Fahrzeugführung sind in den nachfolgend angegebenen Quellen genannt, auf welche hiermit diesbezüglich Bezug genommen wird und deren Inhalt hiermit in diese Anmeldung aufgenommen wird: https://www.springerprofessional.de/ergonomie---hmi/gesundheitsmanagement/wenn-das-autozum-gesundheitsmanager-wird-/15507094, abgerufen am 22.03.2021; https://www.auto-motor- und-sport.de/news/am-puls-des-fahrers-ford-entwickelt-ekg-sitz/, abgerufen am 22.03.2021; https://magazin.rv24.de/2016/08/11/tesla-autopilot-fahrt-mann-ins-krankenhaus/23364/ (manuelle Navigationseingabe durch den Fahrer), abgerufen am 22.03.2021; https://www.autobild.de/artikel/volvo-auto-checkt-fahrer-auf-fahrtuechtigkeit-14700329.html; abgerufen am 22.03.2021; https://androidmag.de/technik/smarte-gesundheit-diese-gadgetsueberwachen-den-koerper/; abgerufen am 22.03.2021.

Sollte nun durch die verbundenen Informationen eine Auffälligkeit auftreten, beispielsweise Herz-Rhythmusstörungen, Herzinfarkt, Ohnmacht, und dergleichen), so wird dies durch das Fahrzeug und insbesondere durch die Vitalerfassungseinrichtung und insbesondere durch die Notrufeinrichtung erfasst und insbesondere geeignete Maßnahmen eingeleitet. Bevorzugt wird ein Notruf (bei der Notrufzentrale) abgesetzt und/oder ein Notfallmodus aktiviert.

Bevorzugt ist die Vitalerfassungseinrichtung über eine (drahtlose und/oder drahtgebundene) Kommunikationsverbindung mit dem Fahrzeug (zum Datenaustausch) verbunden und/oder verbindbar. Bevorzugt können hierzu (insbesondere vorhandene) Schnittstellen des Fahrzeugs wie Bluetooth, WLAN und dergleichen zur Kopplung der Vitalerfassungseinrichtung bzw. von den Vitalwertgebern mit dem Fahrzeug genutzt werden.

Denkbar ist auch, dass die Vitalerfassungseinrichtung Vitalwerte des Nutzers von externen Quellen abrufen und zur Auswertung verwenden und/oder an die Notrufeinrichtung übermitteln kann.

Bevorzugt ist die Vitalerfassungseinrichtung dazu geeignet und bestimmt, auf Grundlage der erfassten Messwerten (oder hiervon abgeleiteter Größen) eines oder mehrerer der Erfassungseinrichtungen in Bezug auf den Nutzer und/oder in Bezug auf die Insassen eine (insbesondere medizinische) (potentielle) Notfallsituation (des Nutzers und/oder der Insassen) zu ermitteln und/oder zu erkennen.

Bevorzugt weist die Notrufeinrichtung eine Vitalerfassungseinrichtung auf. Denkbar ist aber auch, dass eine Vitalerfassungseinrichtung die Notrufeinrichtung aufweist.

Bevorzugt können auf Grundlage einer ermittelten und/oder erkannten (potentiellen) Notfallsituation des Nutzers Weckversuche des Nutzers, beispielsweise durch Ausgabe wenigstens eines akustischen Hinweistons insbesondere in verschiedenen Lautstärken über eine akustische Ausgabeeinrichtung des Fahrzeugs und/oder direkte Kommunikation beispielsweise mit "Hallo Volkswagen" erfolgen. Bei der Ausgabeeinrichtung kann es sich dabei um eine Ausgabeeinrichtung des Fahrzeugs (als insbesondere festen Bestandteil) oder aber um ein (mobiles) Endgerät (insbesondere eines Nutzers und/oder Insassen) handeln, welches (frei) beweglich gegenüber dem Fahrzeug ist und welches zur Datenkommunikation mit dem Fahrzeug und insbesondere der Vitalerfassungseinrichtung verbunden und/oder verbindbar ist.

Bevorzugt kann auf Grundlage einer ermittelten und/oder erkannten (potentiellen) Notfallsituation des Nutzers, bevorzugt nach/im (unmittelbaren) Anschluss einem vorherigen, erfolglos unternommenen Weckversuch, (je nach Phase des autonomen Fahrens) ein Anhalten und/oder Informieren des entgegenkommenden und/oder nachfolgenden Verkehr vorgenommen werden.

Bevorzugt kann auf Grundlage einer ermittelten und/oder erkannten (potentiellen) Notfallsituation des Nutzers, bevorzugt nach/im (unmittelbaren) Anschluss einem vorherigen, erfolglos unternommenen Weckversuch, ein Notruf (durch die Notrufeinrichtung des Fahrzeugs und insbesondere an die Notrufzentrale) abgesetzt werden, welcher bevorzugt Daten in Bezug auf einen (insbesondere) Standort, (Navigations-)Ziel (geändert und/oder ursprüngliches), Routenführung und/oder der festgestellten Problemstellung bzw. das ermittelte Notfallgeschehen umfasst.

Bevorzugt löst das Fahrzeug und/oder die Notrufeinrichtung in Abhängigkeit einer ermittelten und/oder erkannten (potentiellen) Notfallsituation und/oder einer erkannten Anomalie und/oder wenigstens einem medizinischen Notfall einen Kommunikationsaufnahmeversuch mit dem Nutzer (etwa dem Fahrer) und/oder den (weiteren) Insassen vor. Bevorzugt reagiert das Fahrzeug bei erkannten Anomalien und/oder medizinischen Notfällen derart, dass Weckversuche und/oder Kommunikationsaufnahme(n) zwischen dem Fahrzeug und dem Insassen vorgenommen werden. Bevorzugt erfolgen derartige Weckversuche und/oder Kommunikationsaufnahme(n) über wenigstens eine Ausgabeeinrichtung des Fahrzeugs, welche zur akustischen und/oder optischen und/oder haptischen Ausgabe eines (Kommunikations-)Signals und/oder Wecksignals geeignet und bestimmt ist.

Bevorzugt wird bei ermittelten und/oder erkannten (potentiellen) Notfallsituation der Notfallmodus der Notrufeinrichtung und/oder der Notfallmodus des Fahrzeugs aktiviert.

Bevorzugt fährt das Fahrzeug in dem Notfallmodus ohne (jeglichen) Kontakt und/oder Interaktion zwischen dem Nutzer und dem Fahrzeug und insbesondere der Notrufeinrichtung. Bevorzugt wird das Fahrzeug in dem Notfallmodus wenigstens teilautonom und bevorzugt (voll-)autonom bzw. automatisch betrieben. Bevorzugt legt das Fahrzeug in dem Notfallmodus wenigstens einen Abschnitt der Navigationsroute zum Rettungsziel zurück.

Bevorzugt übermittelt die Notrufzentrale an das Fahrzeug und insbesondere an die Notrufeinrichtung und besonders bevorzugt an eine (insbesondere akustische und/oder optische und/oder haptische) Ausgabeeinrichtung des Fahrzeugs oder eine mit dem Fahrzeug in Kommunikationsverbindung stehende (akustische und/oder optische und/oder haptische) Ausgabeeinrichtung Daten bzw. Informationen in Bezug auf eine Erste-Hilfe-Anleitung für anwesende Mitfahrer (zur Ausgabe an wenigstens einen Mitfahrer). Vorteilhaft leistet die Notrufzentralle bzw. Notrufstelle für anwesende Mitfahrer eine Erste-Hilfe-Anleitung.

Bevorzugt wird im Falle eines erkannten Notfalls bzw. einer ermittelten Notfallsituation des Nutzers eine Interaktion mit dem Fahrer oder den Insassen (insbesondere zwischen der Notrufzentrale und dem Fahrzeug, bevorzugt über die Notrufeinrichtung bzw. via einem Notrufassistenten und besonders bevorzugt durch Ausgabe über eine Ausgabeeinrichtung des Fahrzeugs ermöglicht.

Das Rettungsziel wird von der Notrufeinrichtung des Fahrzeugs (etwa unter Zuhilfenahme von Online-Diensten, insbesondere zur Recherche von dem Ort des nächstgelegenen, insbesondere geeigneten, Krankenhauses und/oder der nächstgelegenen, insbesondere geeigneten, Klinik und/oder Notfallzentrum) selbst ermittelt.

Bevorzugt ermittelt die Notrufzentrale auf Grundlage der von dem Fahrzeug und insbesondere der Notrufeinrichtung des Fahrzeugs übermittelten Notfalldaten, insbesondere auf Grundlage des übermittelten (aktuellen) Standorts, ein Rettungsziel. Bevorzugt wird dieses Rettungsziel (über die Kommunikationsverbindung) dem Fahrzeug und insbesondere der Notrufeinrichtung (als insbesondere neues oder geändertes Navigationsziel) übermittelt. Die Notrufzentrale, insbesondere die Notrufstelle, kann (somit) ein neues (Rettungs-)Ziel zurück (zum Fahrzeug und insbesondere die Notrufeinrichtung) überspielen und bevorzugt damit ein neues (Rettungs-)Ziel, z.B. das nächstgelegene, insbesondere geeignete, Krankenhaus bzw. die nächstgelegene, insbesondere geeignete, Klinik festlegen und/oder ermitteln. Insbesondere wird die Zielführung in einem Navigationssystem des Fahrzeugs (zum Rettungsziel hin) geändert und besonders bevorzugt das nächstgelegene Krankenhaus bzw. die nächstgelegene Klinik oder das durch die Notrufzentrale bevorzugt geänderte neue Ziel angesteuert. Bevorzugt wird das (Rettungs-)Ziel vom Fahrzeug insbesondere im Klartext nochmal wiederholt,

um Fehler zu vermeiden. Bevorzugt wird das (Rettungs-)Ziel nochmals überprüft. Erfindungsgemäß werden zwischen dem Fahrzeug und insbesondere der Notrufeinrichtung einerseits und der Notrufzentrale andererseits in redundanter Weise wenigstens zweimal Daten in Bezug auf das Rettungsziel ausgetauscht.

Bei einem bevorzugten Verfahren erfolgt im Anschluss an eine Übermittlung eines Rettungsziels an das Fahrzeug durch die Notrufzentrale, ein Abgleich des aktualisierten Navigationsziels des Fahrzeugs mit der Notrufzentrale durch Übermittlung des aktualisierten Navigationsziels des Fahrzeugs an die Notrufzentrale. Dies bietet den Vorteil, dass nochmals überprüft wird, ob dem Fahrzeug das richtige und/oder das identische Rettungsziel wie der Notrufzentrale vorliegt. Dies ist essentiell für eine schnelle Rettung bzw. ein schnelles Senden von Rettungspersonal an das Fahrzeug und/oder den Nutzer und/oder an die ausgetauschte Fahrroute des Fahrzeugs.

Ein Ändern des (bevorzugt übermittelten) (Rettungs-)Ziels, indem als Navigationsziel das Rettungsziel gewählt, welches bevorzugt von der Notrufzentrale vorgegeben wird, kann anschließend bevorzugt (mit der Notrufzentrale) abgeglichen werden.

Bei einem weiter bevorzugten Verfahren ermittelt das Fahrzeug auf Grundlage des vorgegebenen Rettungsziels die Navigationsroute. Hierdurch wird vorteilhaft die neue (Navigations-)Route des Fahrzeugs in Bezug auf das (vorgegebene) Rettungsziel berechnet. Bevorzugt wird die Navigationsroute auf Grundlage von Kriterien einer (kürzesten) Fahrdauer und/oder einer (kürzesten) Navigationsroute und/oder einer in Bezug auf den Verkehr sicheren Route ermittelt. Bevorzugt wird bei der Ermittlung der Navigationsroute (von einem Startpunkt, etwa dem aktuellen Fahrzeugstandort, bis hin zu dem vorgegebenen Rettungsziel) keine (aktuelle) Position und/oder Standort eines Rettungsmittels, insbesondere eines Rettungsfahrzeugs, berücksichtigt. Bevorzugt wird bei der Ermittlung der Navigationsroute hinsichtlich eines zu erreichenden Ziels ausschließlich das (vorgegebene) Rettungsziel berücksichtigt. Bevorzugt wird das (insbesondere mobile) Rettungsmittel nicht als Zwischenziel bei der Ermittlung der (Navigations-)Route berücksichtigt. Bevorzugt wird (auch) kein mobiles Rettungsmittel als Rettungsziel vorgegeben. Denkbar ist aber auch, dass als Rettungsziel ein (insbesondere aktueller und/oder in vorgegebener Zeit erreichbarer) Standort eines mobilen Rettungsmittels gewählt und/oder bestimmt und/oder vorgegeben wird.

Bevorzugt übermittelt das Fahrzeug die in Bezug auf das Rettungsziel ermittelte Navigationsroute an die Notrufzentrale. Hierdurch wird vorteilhaft die neu berechnete Route an die Notrufzentrale, etwa die Notrufstelle übermittelt. Durch die Übermittlung der ermittelten Navigationsroute ist es möglich, dass die Notrufzentrale bei mehreren Wahlmöglichkeiten einer Navigationsroute über die von dem Fahrzeug ermittelte und/oder festgelegte und/oder ausgewählte Navigationsroute informiert wird.

Bevorzugt ermittelt die Notrufzentrale wenigstens ein in der Nähe des Fahrzeugs und/oder der (ermittelten und/oder vorgegebenen) Navigationsroute des Fahrzeugs befindliches (insbesondere mobiles) Rettungsmittel. Bevorzugt wird die Ermittlung eines in der Nähe befindlichen Rettungsmittels auf Grundlage von Ortsinformationen, insbesondere GPS-Daten, der und insbesondere einer Vielzahl von Rettungsmittel vorgenommen.

Bei dem (mobilen) Rettungsmittel handelt es sich bevorzugt um ein Einsatz- und/oder Rettungsfahrzeug. Beispielsweise kann es sich um einen Krankenwagen oder einen Rettungshubschrauber handeln.

Bei einem weiter bevorzugten Verfahren übermittelt die Notrufzentrale die Routendaten wenigstens mittelbar (bevorzugt direkt) und/oder wenigstens teilweise an ein, insbesondere mobiles und insbesondere in der Nähe des Fahrzeugs und/oder der Navigationsroute befindliches, Rettungsmittel. Bevorzugt werden die Routendaten zu wenigstens einem Abschnitt der Navigationsroute des Fahrzeugs und bevorzugt zur gesamten ermittelten Navigationsroute des Fahrzeugs übermittelt.

Bevorzugt leitet die Notrufzentrale (insbesondere die Notrufstelle) ein in der Nähe befindliches Rettungsmittel insbesondere direkt zur (bekannten) insbesondere ermittelten und/oder übermittelten (Navigations-)Route (des Fahrzeugs), besonders bevorzugt um das Fahrzeug abzufangen. Dies bietet den Vorteil, dass das (mobile) Rettungsmittel, welches zur Rettung und/oder medizinischen Unterstützung des Nutzers des Fahrzeugs beauftragt wird, zu einem Zwischenzielpunkt entlang der Navigationsroute fahren kann, an welchem es auf das Fahrzeug treffen kann.

Somit wird vorteilhaft ein Treffen eines (mobilen) Rettungsmittels auf das Fahrzeug schon vor dem Erreichen des Rettungsziels erreicht. Durch ein derartiges Rendezvousverfahren kann die Hilfsfrist, also insbesondere die Zeitdauer von Absetzen des Notrufs bis zum Eintreffen des (mobilen) Hilfsmittels am Fahrzeug erheblich verkürzt werden. Hierdurch können Menschenleben gerettet werden.

Bevorzugt ist durch die Routendaten die (beabsichtigte und/oder in einem Navigationssystem des Fahrzeugs eingestellte) Navigationsroute des Fahrzeugs eindeutig festgelegt.

Bei einem weiter bevorzugten Verfahren wird ein Anhalten des Fahrzeugs durch einen Datenaustausch zwischen dem Fahrzeug und dem Rettungsmittel und/oder der Notrufzentrale ausgelöst und/oder bewirkt. Hierdurch wird vorteilhaft ein Stoppen des Fahrzeugs entlang der Navigationsroute noch vor Erreichen des Rettungsziels, insbesondere ohne Interaktion des Nutzers, ermöglicht.

Das Fahrzeug kann beispielsweise durch eine direkte Kommunikationsverbindung zwischen dem Fahrzeug und dem (mobilen) Rettungsmittel (und/oder einer Einsatzkraft und/oder einem (mobilen) Endgerät für das Rettungsmittel oder einer Einsatzkraft), insbesondere einer Car2Car-Kommunikation, oder durch die Notrufstelle (und/oder das Rettungsmittel) gestoppt werden.

Bei einem bevorzugten Verfahren werden die zum Anhalten und/oder zur Entriegelung des Fahrzeugs über eine direkte Kommunikationsverbindung zwischen dem Rettungsmittel und dem Fahrzeug ausgetauscht. Dies ermöglicht vorteilhaft, dass das Fahrzeug beispielsweise verschlossen bleiben kann, wenn die Gegend zu gefährlich ist. Dies bietet den Vorteil, dass hierdurch ein Insassenschutz in gefährlichen oder fragwürdigen Gegenden etwa vor Diebstahl gewährleistet werden kann. Bevorzugt kann das Fahrzeug nur vom Rettungsmittel und/oder Einsatzkräften des Rettungsmittels und/oder hiervon autorisierten Dritten geöffnet werden.

Bevorzugt übermittelt das Fahrzeug, insbesondere in Zusammenhang mit dem Absetzen des Notrufs und/oder Übermitteln der Notrufdaten an die Notrufzentrale, Anhaltedaten zum Anhalten des Fahrzeugs an die Notrufzentrale. Bevorzugt übermittelt die Notrufzentrale die Anhaltedaten zum Anhalten des Fahrzeugs an das (zur Rettung beauftragte) Rettungsmittel, bevorzugt bei der Anweisung zur Rettung des in einer (medizinischen) Notfallsituation befindlichen Nutzers des Fahrzeugs. Bevorzugt hält das Fahrzeug nach Empfang der Anhaltedaten und/oder Austausch weiterer Autorisierungsdaten (mit dem Rettungsmittel) an und/oder hält bei der nächstgelegenen sicheren Park- und/oder Stoppmöglichkeit an.

Bevorzugt erfolgt ein (insbesondere sicheres) Anhalten des Fahrzeugs auf Grundlage beispielsweise einer Übermittlung eines Freischaltcodes, insbesondere via einer direkten Kommunikation zwischen dem Fahrzeug und dem Rettungsmittel (und/oder einer Einsatzperson und/oder eines (mobilen) Endgeräts einer Einsatzperson), insbesondere via einer Car2Car-Kommunikation und/oder via einer X2Car-Kommunikation und/oder via einer Car2X-Kommunikation (bevorzugt bei einem, insbesondere mobilen, Endgerät).

Bevorzugt erfolgt ein (insbesondere sicheres) Anhalten des Fahrzeugs auf Grundlage der Übermittlung einer Halteanweisung durch die Notrufzentrale und/oder durch das Rettungsmittel an das Fahrzeug. Auch hierdurch kann ein sicheres Anhalten und Missbrauch durch Dritte vermieden werden.

Bei einem weiter bevorzugten Verfahren werden zur Entriegelung des Fahrzeugs Autorisierungsdaten von dem Fahrzeug an die Notrufzentrale und/oder an das Fahrzeug übermittelt. Bevorzugt übermittelt das Fahrzeug, insbesondere in Zusammenhang mit dem Absetzen des Notrufs und/oder Übermitteln der Notrufdaten an die Notrufzentrale, die Autorisierungsdaten an die Notrufzentrale. Bevorzugt übermittelt die Notrufzentrale die Autorisierungsdaten zur Entriegelung des Fahrzeugs an das (zur Rettung beauftragte) Rettungsmittel, bevorzugt bei der Anweisung zur Rettung des Nutzers (bzw. des Patienten) des Fahrzeugs.

Bevorzugt erfolgt eine Entriegelung des Fahrzeugs auf Grundlage beispielsweise eines Freischaltcodes (insbesondere als Autorisierungsdaten), welche bevorzugt über eine direkte Kommunikation zwischen dem Rettungsmittel (und/oder einer Einsatzkraft bzw. einer Einsatzperson des Rettungsmittels und/oder einem (mobilen) Endgerät des Rettungsmittels oder einer Einsatzkraft bzw. Einsatzperson) und dem Fahrzeug übermittelt werden.

Der Freischaltcode kann zusätzlich oder alternativ verbal an das Fahrzeug übermittelt werden.

Wird das Fahrzeug nicht abgefangen, wird die (Navigations-)Route zum vereinbarten Rettungsziel, etwa zum vereinbarten Krankenhaus bzw. zur vereinbarten Klinik, fortgesetzt. Bevorzugt erfolgt eine automatische Entriegelung des Fahrzeugs am (Rettungs-)Ziel.

Bei einem weiter bevorzugten Verfahren stellt das Fahrzeug zur Ankunft, bevorzugt (im Wesentlichen) bei Ankunft, am Rettungsziel Hinweissignale zur Ausgabe und/oder zur Übermittlung, insbesondere an eine Rettungsstelle am Rettungsziel bzw. an das Rettungsziel bereit. Dabei kann das Fahrzeug bereits (zeitlich) vor der Ankunft, insbesondere bei einer vorgegebenen Zeitdauer vor einer voraussichtlichen Ankunftszeit am Rettungsziel Hinweissignale zur Ausgabe und/oder zur Übermittlung, insbesondere an eine Rettungsstelle am Rettungsziel bzw. an das Rettungsziel, bereitstellen und besonders bevorzugt die Hinweissignale übermitteln. Bevorzugt macht sich in der Zufahrt der Notaufnahme das Fahrzeug durch akustischen und/oder optische Signale bemerkbar. Auch dies bietet den Vorteil, dass die Hilfezeiten verkürzt werden und wertvolle Zeit zur medizinischen Versorgung des Nutzers gewonnen werden kann, indem Rettungskräfte oder Rettungspersonen am Rettungsziel bzw. das Rettungsziel über die Ankunft des Fahrzeugs alarmiert werden.

Alternativ und zusätzlich ist neben der Ausgabe akustischer und/oder optischer Signale auch ein Bereitstellen und insbesondere ein Übermitteln elektronischer Hinweissignale an die Rettungseinheit (das Krankenhaus und/oder die Klinik und/oder die Notaufnahme) möglich, welche bevorzugt mittels einer Ausgabeeinrichtung der Rettungseinheit ausgegeben werden. Bevorzugt kann das Hinweissignal mittels der Ausgabeeinrichtung der Rettungseinheit akustisch und/oder optisch und/oder haptisch ausgegeben werden.

Das Hinweissignal bzw. die Hinweissignale können Informationen zur Art der Notfallsituation und/oder zur Anzahl der an der Notfallsituation Beteiligten und/oder zu den Routendaten (der Navigationsroute) und/oder zum Standort des Fahrzeugs bei Absetzen des Notrufs und/oder zu bereits an dem Nutzer vorgenommenen medizinischen Maßnahmen (wie Erste-Hilfe-Maßnahmen) und/oder zu dem (Gesundheits-)Zustand des Nutzers und/oder von wenigstens einer Vitalerfassungseinrichtung des Fahrzeugs erfasste Vitaldaten und/oder zu (wenigstens einem Teil der) übermittelten Notfalldaten umfassen.

Die vorliegende Erfindung ist weiterhin gerichtet auf eine Notrufeinrichtung für ein, insbesondere wenigstens teilweise autonom und bevorzugt autonom betreibbares und/oder betriebenes, Fahrzeug zum Betrieb in einem Notfallmodus, in welchem wenigstens zeitweise zwischen der Notrufeinrichtung und einer Notrufzentrale eine Kommunikationsverbindung herstellbar ist und in welchem als Navigationsziel für das Fahrzeug ein Rettungsziel vorgegeben und/oder vorgebbar ist.

Erfindungsgemäß ist die Notrufeinrichtung dazu geeignet, bestimmt sowie konfiguriert, mit der Notrufzentrale Routendaten auszutauschen, welche für eine Navigationsroute von einem Standort des Fahrzeugs zum Rettungsziel charakteristisch sind. Bevorzugt übermittelt die Notrufeinrichtung Routendaten an die Notrufzentrale zur Weiterleitung und/oder Bereitstellung an wenigstens ein (von der Notrufzentrale zur Rettung vorgesehenes) Rettungsmittel.

Es wird also auch im Rahmen der erfindungsgemäßen Notrufeinrichtung vorgeschlagen, dass (präzise) Routendaten in Bezug auf die (Navigations-)Route des Fahrzeugs und dem Rettungsziel weitergegeben und/oder übermittelt werden, um den Rettungsmittel zu ermöglichen, das Fahrzeug bereits (entlang seiner Navigationsroute) zu erreichen, bevor das Fahrzeug das Rettungsziel erreicht. Gelingt dies nicht, wird vorteilhaft dennoch keine wertvolle Zeit durch die direkte Route des Fahrzeugs zum Rettungsziel verloren.

Bevorzugt ist die Notrufeinrichtung dazu eingerichtet, geeignet und/oder bestimmt, das obig beschriebene Verfahren sowie alle bereits obig im Zusammenhang mit dem Verfahren beschriebene Verfahrensschritte einzeln oder in Kombination miteinander auszuführen. Umgekehrt kann das Verfahren mit allen im Rahmen der Notrufeinrichtung beschriebenen Merkmalen einzeln oder in Kombination miteinander ausgestattet sein.

Bevorzugt ist die Notrufeinrichtung dazu geeignet und bestimmt, besonders bevorzugt im Rahmen des Absetzen des Notrufs und/oder während eines Datenaustauschs mit der

Notrufzentrale, Entriegelungsdaten zur Entriegelung des Fahrzeugs und/oder Anhaltedaten zum Anhalten des Fahrzeugs, bevorzugt an die Notrufzentrale, zu übermitteln.

Die vorliegende Erfindung ist weiterhin gerichtet auf ein Fahrzeug, insbesondere Kraftfahrzeug, umfassend eine obig beschriebene Notrufeinrichtung für ein Fahrzeug entsprechend einer Ausführungsform. Bei dem Fahrzeug kann es sich insbesondere um ein (motorisiertes) Straßenfahrzeug handeln.

Bei einem Fahrzeug kann es sich um ein Kraftfahrzeug handeln, welches insbesondere ein von dem Fahrer selbst gesteuertes Kraftfahrzeug (Autonomiestufe 0, Selbstfahrer, "Driver only", der Fahrer fährt selbst, insbesondere lenkt, beschleunigt, bremst und dergleichen), ein halbautonomes, autonomes (beispielsweise der Autonomiestufe Level 1, Level 2, Level 3 oder 4 oder 5 (der Norm SAE (J3016))) oder selbstfahrendes Kraftfahrzeug ist.

Die Autonomiestufe Level 1 bezeichnet eine Fahrerassistenz. Bestimmte Assistenzsysteme helfen bei der Fahrzeugbedienung, beispielsweise der Abstandsregeltempomat (ACC). Die Autonomiestufe Level 2 bezeichnet eine Teilautomatisierung, insbesondere werden hier Funktionen wie automatisches Einparken, Spurhalten, allgemeine Längsführung, Beschleunigen, Abbremsen von den Assistenzsystemen übernommen, beispielsweise vom Stauassistent.

Die Autonomiestufe Level 3 bezeichnet eine Bedingungsautomatisierung. Der Fahrer muss insbesondere das System nicht dauernd überwachen. Das Fahrzeug führt insbesondere selbstständig Funktionen wie das Auslösen des Blinkers, Spurwechsel und Spurhalten durch. Der Fahrer kann sich anderen Dingen zuwenden, wird aber bei Bedarf innerhalb einer Vorwarnzeit vom System aufgefordert, die Führung zu übernehmen. Der Gesetzgeber arbeitet derzeit darauf hin, Autonomiestufen-3-Fahrzeuge zuzulassen. Die Autonomiestufe Level 4 bezeichnet dabei Hochautomatisierung. Die Führung des Fahrzeugs wird insbesondere dauerhaft vom System übernommen. Werden die Fahraufgaben vom System nicht mehr bewältigt, kann der Fahrer aufgefordert werden, die Führung zu übernehmen. Die Autonomiestufe Level 5 bezeichnet dabei vollautomatisch fahrende Fahrzeuge. Insbesondere ist kein Fahrer erforderlich. Außer dem Festlegen des Ziels und dem Starten des Systems ist insbesondere kein menschliches Eingreifen erforderlich. Das Fahrzeug kommt ohne Lenkrad und Pedale aus.

Ebenso kann es sich bei dem Fahrzeug um ein fahrerloses Transportsystem handeln. Das Fahrzeug kann dabei von einem Fahrer gesteuert werden oder autonom fahren.

Darüber hinaus kann es sich bei dem Fahrzeug neben einem Straßenfahrzeug auch um ein Flugtaxi, ein Flugzeug und ein anderes Fortbewegungsmittel oder eine andere Fahrzeugart handeln, beispielsweise ein Luft-, Wasser- oder Schienenfahrzeug.

Bei dem Fahrzeug kann es sich um ein Nutzfahrzeug, eine Landmaschine, eine Baumaschine, ein Flurförderfahrzeug, einen (elektrischen) Rollstuhl, ein Schiff (dort nur bis an den Hafen), eine Bergwerkmaschine, (ein Fahrzeug aus der) Bahnindustrie handeln.

Die vorliegende Erfindung ist weiterhin gerichtet auf ein Notrufsystem umfassend wenigstens eine obig beschriebene Notrufeinrichtung für ein Fahrzeug entsprechend einer Ausführungsform und/oder wenigstens ein Fahrzeug mit einer obig beschriebenen Notrufeinrichtung entsprechend einer Ausführungsform sowie eine (insbesondere obig beschriebene) Notrufzentrale, insbesondere zur Verwaltung von durch Notrufeinrichtungen abgesetzte Notrufe und/oder zur Verwaltung von übermittelter Notfalldaten. Bevorzugt weist das Notrufsystem eine Vielzahl von Notrufeinrichtungen verschiedener Fahrzeuge auf, welche über ein Kommunikationsnetz zum Datenaustausch mit der Notrufzentrale verbindbar sind. Bevorzugt ist die (insbesondere jede) Notrufeinrichtung und/oder die Notrufzentrale zur Ausführung der obig im Zusammenhang mit dem beschriebenen Verfahren ausgeführten Verfahrensschritte einzeln oder in Kombination miteinander geeignet und bestimmt.

Die vorliegende Erfindung des Verfahrens zum Betreiben eines Fahrzeugs mit einer Notrufeinrichtung in einem Notfallmodus des Fahrzeugs wurden im Zusammenhang mit einem Fahrzeug beschrieben. Die vorliegende Erfindung ist aber auch auf andere Systeme in anderen Bereichen, beispielsweise für Hausnotrufe, für einen automatischer Notruf mit Übermittlung der erkannten Anomalie zusätzlich zum Ruf per Knopfdruck (falls dieser noch möglich ist) übertragbar. Die Anmelderin behält sich vor, ein hierauf gerichtetes Verfahren und eine Notrufeinrichtung ebenfalls zu beanspruchen.

Die vorliegende Erfindung ist weiterhin gerichtet auf ein Computerprogramm oder Computerprogrammprodukt, umfassend Programmmittel, insbesondere einen Programmcode, welcher zumindest einen oder mehrere Verfahrensschritte des erfindungsgemäßen Verfahrens einzeln oder in Kombination miteinander und bevorzugt eine der beschriebenen bevorzugten Ausführungsformen repräsentiert oder kodiert und zum Ausführen durch eine Prozessoreinrichtung ausgebildet ist.

Die vorliegende Erfindung ist weiterhin gerichtet auf einen Datenspeicher, auf welchem zumindest eine Ausführungsform des erfindungsgemäßen Computerprogramms oder einer bevorzugten Ausführungsform des Computerprogramms gespeichert ist.

Weitere Vorteile und Ausführungsformen ergeben sich aus den beigefügten Zeichnungen:
Darin zeigen:

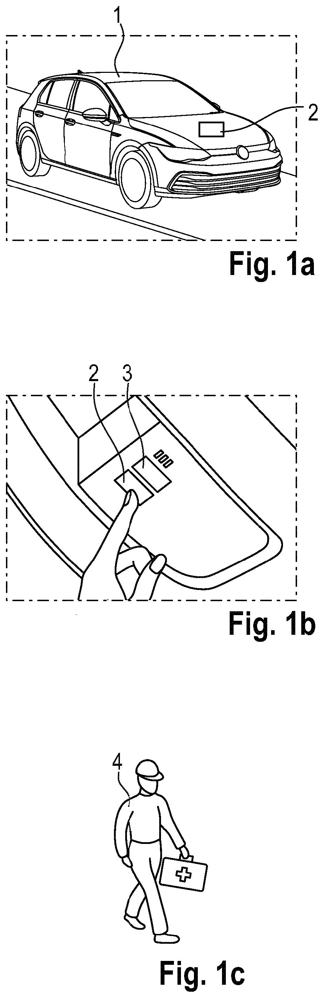

- Fig. 1a: eine Darstellung eines Fahrzeugs mit einer erfindungsgemäßen Notrufeinrichtung gemäß einer Ausführungsform;
- Fig. 1: beine erfindungsgemäße Notrufeinrichtung gemäß einer Ausführungsform;
- Fig. 1c: eine Darstellung eines medizinischen Rettungspersonals;
- Fig. 2: ein schematisches Flussdiagramm einer Ausführungsform eines erfindungsgemäßen Verfahrens; und
- Fig. 3: ein schematisches Flussdiagramm einer Ausführungsform eines erfindungsgemäßen Verfahrens.

Fig. 1a zeigt eine schematische Darstellung eines Fahrzeugs 1, welches beispielsweise eine, etwa in Fig. 1b abgebildete Notrufeinrichtung 2 in einer Ausführungsform aufweisen kann. Die Notrufeinrichtung 2 kann manuell von einem Nutzer des Fahrers zum Absetzen eines Notrufs (an eine Notrufzentrale) betätigt werden.

Weiter kann ein (physisches) Betätigungselement für einen Nutzer vorgesehen sein, etwa in Form eines (Druck-)Schalters, mittels welchem der Nutzer insbesondere einen Sprachruf (oder den Aufbau einer anderen Kommunikationsverbindung) zu einer Notrufzentrale initiieren kann.

Durch den abgesetzten Notruf kann (wenigstens) ein medizinisches Rettungspersonal 4, veranschaulicht in Fig. 1c, alarmiert werden.

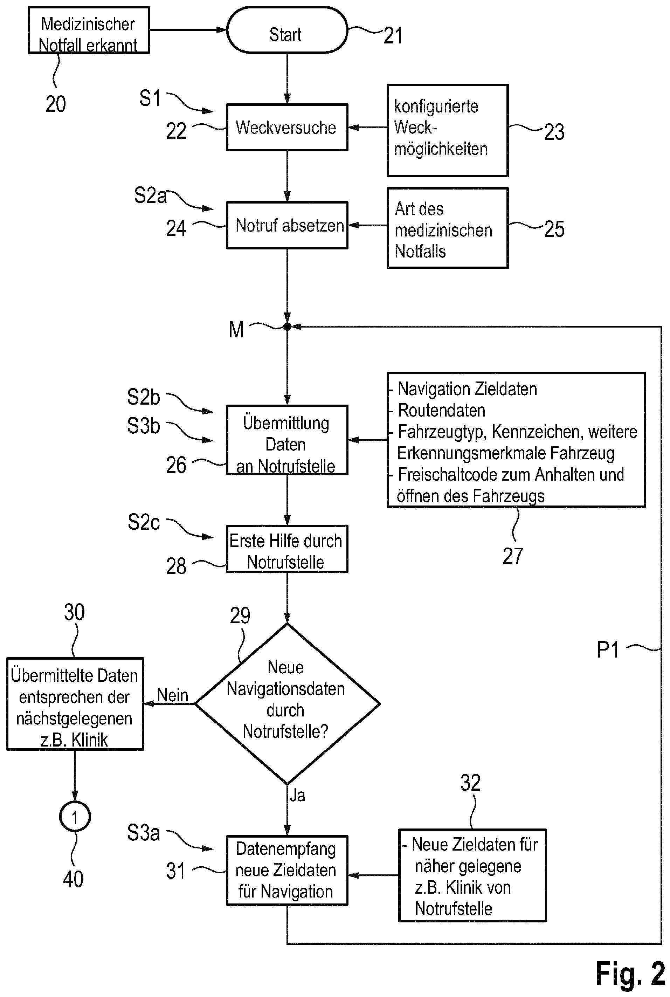

Fig. 2 zeigt ein schematisches Flussdiagramm einer Ausführungsform eines (insbesondere ersten Teils eines) erfindungsgemäßen Verfahrens. Bevorzugt überwacht das Fahrzeug 1 die Vitalfunktionen des Fahrers.

Das Bezugszeichen 20 kennzeichnet dabei einen erkannten medizinischen Notfall, welcher ein Notfallverfahren starten kann. Dieser Start ist mit dem Bezugszeichen 21 gekennzeichnet.

Wird ein medizinischer Notfall erkannt (Bezugszeichen 20) werden bevorzugt folgende Maßnahmen ausgeführt:
In einem, hier als Stufe 1 (S1) gekennzeichneten Verfahrensschritt werden Weckversuche 22 unternommen, beispielsweise ein akustischer Hinweiston in verschiedenen Lautstärken, eine direkte Kommunikation, z. B. "Hallo Volkswagen", und dergleichen. Hierfür können konfigurierte Weckmöglichkeiten 23 vorgesehen sein.

In einem, hier als Stufe 2a (S2a) gekennzeichneten, bevorzugt an Stufe 1 anschließenden, Verfahrensschritt erfolgt ein Notruf absetzen, gekennzeichnet durch das Bezugszeichen 24, und eine Übermittlung der festgestellten Problemstellung, wobei bevorzugt eine Art des medizinischen Notfalls, welche durch das Bezugszeichen 25 gekennzeichnet ist, berücksichtigt wird.

In einem, hier als Stufe 2b (S2b) gekennzeichneten, bevorzugt an Stufe 2a anschließenden, Verfahrensschritt erfolgt eine Übermittlung der Daten an eine Notrufstelle bzw. Notrufzentrale, gekennzeichnet durch das Bezugszeichen 26. Im Notruf wird der aktuelle Standort, das Ziel (geändert oder ursprüngliches) sowie die Routenführung an die Notrufstelle übertragen.

Bei der Übermittlung der Daten an die Notrufstelle 26 können dabei Daten übermittelt und/oder berücksichtigt werden, welche aus einer Gruppe von Daten 27 ausgewählt sind, welche die Navigation-Zieldaten, Routendaten, Fahrzeugtyp, Kennzeichen, weitere Erkennungsmerkmale des Fahrzeugs, einen Freischaltcode zum Anhalten und Öffnen des Fahrzeugs und dergleichen sowie Kombinationen hiervon umfasst.

In einem bevorzugten, hier als Stufe 2c (S2c) gekennzeichneten, bevorzugt an Stufe 2b anschließenden, Verfahrensschritt 28 leistet die Notrufstelle für anwesende Mitfahrer eine Erste-Hilfe-Anleitung. Zusätzlich oder alternativ kann die Notrufstelle auch für den Nutzer eine Hilfestellung, Maßnahmen, Beruhigen, und weitere (über eine insbesondere drahtlose Kommunikationsverbindung) übermittelbare medizinische Versorgung oder Betreuung zur Verfügung stellen und/oder einleiten.

In einem bevorzugten Verfahrensschritt 29 wird (bevorzugt durch eine Entscheidung der Notrufstelle) bestimmt, ob neue Navigationsdaten durch die Notrufstelle übermittelt werden sollen. In dem Fall 30, in welchem die übermittelten Daten der nächstgelegenen beispielsweise Klinik bzw. Krankenhaus entsprechen, werden keine Navigationsdaten durch die Notrufstelle übermittelt.

Andernfalls kann die Notrufstelle ein neues Ziel zurück überspielen und damit ein neues Ziel, beispielsweise eine nächstgelegene, (für die Art des medizinischen Notfalls) geeignete Klinik bzw. das nächstgelegene, (für die Art des medizinischen Notfalls) geeignete Krankenhaus festlegen. Bevorzugt wird das Ziel vom Fahrzeug im Klartext nochmal wiederholt, um Fehler zu vermeiden.

Bevorzugt erfolgt in einem bevorzugten, hier als Stufe 3a (S3a) gekennzeichneten, Verfahrensschritt 31 ein Datenempfang neuer Zieldaten 32 für die Navigation (des Fahrzeugs), welche bevorzugt von der Notrufstelle übermittelt werden.

Bevorzugt wird die neue Route zurück an die Notrufstelle überspielt (da je nach Navigationssystem unterschiedlich berechnete Routen entstehen können).

Im Anschluss (siehe Pfeil P1, welcher in dem Punkt M des Flussdiagramms mündet, wird basierend auf den neuen Zieldaten in einem hier als Stufe 3b (S3b) bezeichneten Verfahrensschritt, der insbesondere vormals bereits ausgeführte Verfahrensschritt der Stufe 2b S2b ausgeführt (allerdings auf Grundlage der neuen Zieldaten).

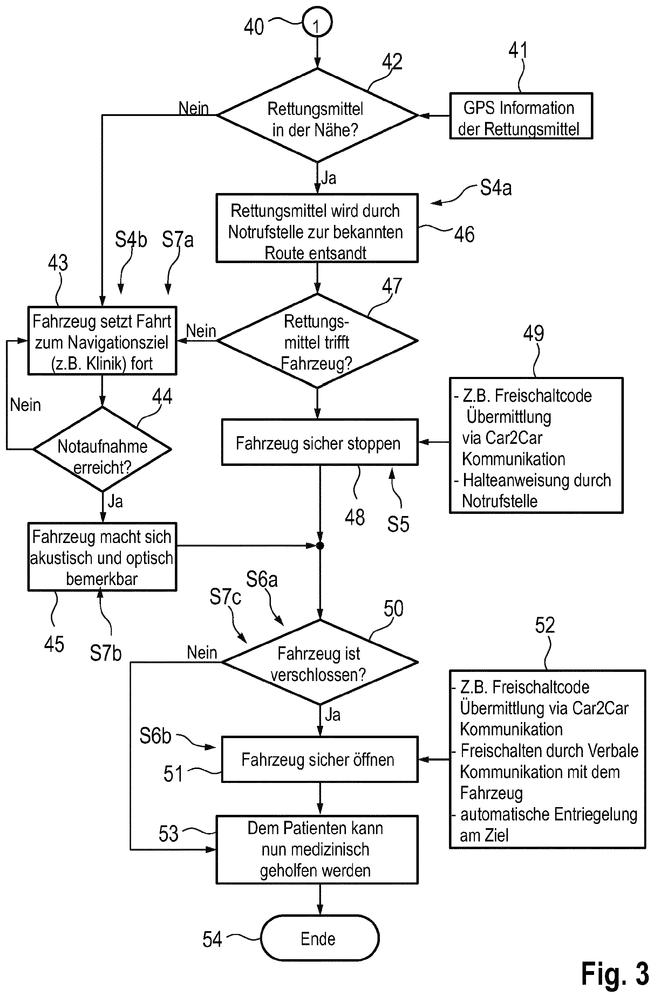

Insbesondere können die Verfahrensschritte der Stufen 3a und 3b bzw. 2b und/oder 2c insbesondere iterativ und/oder (zumindest zeitweise und/oder einzelne Verfahrensschritte) zeitgleich so lange durchgeführt werden, bis die übermittelten Daten der nächstgelegenen Rettungsstelle, etwa der nächstgelegenen Klinik, entsprechen. Ist dies der Fall, werden bevorzugt die Verfahrensschritte, welche in dem Flussdiagramm der Figur 3 beschrieben werden, einzeln oder in Kombination miteinander ausgeführt. Beispielsweise kann der Verfahrensschritt der Stufe 2c ununterbrochen bzw. kontinuierlich durchgeführt werden, um für den Nutzer (den Patienten) kontinuierlich eine Erste-Hilfe bereitstellen bzw. unterstützen bzw. anleiten zu können.

Fig. 3 zeigt ein schematisches Flussdiagramm einer Ausführungsform eines (insbesondere zweiten Teils eines) erfindungsgemäßen Verfahrens.

Ist ein Rettungsmittel 4 in der Nähe des Fahrzeugs 1 (Entscheidungsschritt 42), so kann die Notrufstelle in einem hier als Stufe 4a (S4a) gekennzeichnetem Verfahrensschritt 46 das Rettungsmittel zu der bekannten Route des Fahrzeugs senden, um dieses "abzufangen". Bevorzugt wird in dem Entscheidungsschritt 42 eine Bestimmung und/oder Beurteilung, ob ein Rettungsmittel 4 in der Nähe des Fahrzeugs 1 ist, auf Grundlage von GPS-Information 41 der Rettungsmittel getroffen.

Solange das Fahrzeug 1 nicht "abgefangen" wird, bleibt das Fahrzeug 1 in Bewegung zum vorgesehenen (Navigations-)Ziel durch die Notrufstelle. Dieser Zustand 43, in welchem das Fahrzeug 1 nicht "abgefangen" ist und seine Fahrt zum Navigationsziel (z. B. Klinik) fortsetzt, wird hier als Stufe 4b gekennzeichnet.

Tritt das Ereignis 47 ein, in welchem das Rettungsmittel 4 das Fahrzeug 1 mit dem medizinischen Notfall antrifft, kann das Fahrzeug 1 durch das Rettungspersonal 4 durch beispielsweise Car2Car-Kommunikation oder durch die Notrufstelle in einem hier als Stufe 5 (S5) gekennzeichneten Verfahrensschritt (sicher) gestoppt werden (Schritt 48). Die beispielsweise Car2Car-Kommunikation durch das Rettungspersonal kann beispielsweise einen Kommunikations-Freischaltcode beinhalten, der über die Notrufstelle mit dem Fahrzeug ausgetauscht wird oder die Notrufstelle fordert das Fahrzeug zum Anhalten auf.

Das Stoppen des Fahrzeugs kann auf Grundlage von Daten 49 erfolgen, welche Daten wie beispielsweise einen Freischaltcode, bevorzugt übermittelt via Car2Car-Kommunikation, und/oder eine Halteanweisung durch die Notrufstelle umfassen.

In dem hier als Stufe 6a (S6a) bezeichneten Verfahrensschritt 50 wird ermittelt, ob sich das Fahrzeug in einem verschlossenen Zustand befindet. Das Fahrzeug 1 kann, je nach Einstellung, bereits offen oder je nach Gefährlichkeit der gerade durchfahrenen Gegend noch verschlossen sein.

In dem hier als Stufe 6b (S6b) gekennzeichneten Verfahrensschritt 51 wird das Fahrzeug (sicher) geöffnet. Das Öffnen wird bevorzugt durch einen oder mehrere Verfahrensschritte 52 wie beispielsweise einer Freischaltcode-Übermittlung via Car2Car-Kommunikation und/oder einem Freischalten durch verbale Kommunikation mit dem Fahrzeug und/oder einer automatischen Entriegelung am Ziel vorgenommen. Bevorzugt erhält das Rettungspersonal 4 durch die Notrufstelle beispielsweise einen "Freischaltcode" um das Fahrzeug zu öffnen (Schnittstelle könnte eine verbale Kommunikation mit dem Fahrzeug sein, bei der der Code durchgegeben wird oder auch über Car2Car-Kommunikation mit entsprechendem Freischaltcode).

Nun kann bevorzugt dem Patienten geholfen werden. Ist jedoch kein geeignetes Rettungsmittel auf dem Weg zur nächsten Klinik verfügbar oder fängt das Fahrzeug nicht auf dem Weg ab, so wird die Route fortgesetzt.

In diesem Fall fährt das Fahrzeug in dem hier als Stufe 7a (S7a) gekennzeichneten Verfahrensschritt 43 (weiter) bis zur Klinik (bzw. zum Krankenhaus) in die Zufahrt / Auffahrt der Notaufnahme.

In dem hier als Stufe 7b (S7b) gekennzeichneten Verfahrensschritt 45 macht sich das Fahrzeug 1 in der Zufahrt zur Notaufnahme durch akustische und/oder optische Signale bemerkbar, damit der Patient durch das, bevorzugt von der Notrufzentrale (Notrufstelle) vorab über die Ankunft des Patienten informierte, Klinikpersonal in Empfang genommen werden kann.

In dem hier als Stufe 7c (S7c) bezeichneten Verfahrensschritt 50 erfolgt eine Entriegelung vom Fahrzeug nach Ankunft entweder automatisch oder wie in Stufe 6a (S6a) und/oder Stufe 6b (S6b).

Von Stufe 3 bis Stufe 7 könnte der Kontakt mit der Rettungsleitstelle aufrecht erhalten werden, um eventuell Veränderungen der Situation direkt vom Disponenten mit den Insassen zu kommunizieren und die Klinik über die Veränderungen zu informieren.

Das Bezugszeichen 53 kennzeichnet nun, dass dem Patienten medizinisch geholfen werden kann, was das Ende 54 des Flussdiagramms bildet.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

### Bezugszeichenliste

- 1: Fahrzeug
- 2: Notrufeinrichtung
- 3: Betätigungselement
- 4: Rettungspersonal
- M: Mündungspunkt
- P1: Pfeil
- S1: Verfahrensstufe
- S2a, S2b, S2c: Verfahrensstufe
- S3a, S3b: Verfahrensstufe
- S4a, S4b, S5: Verfahrensstufe
- S6a, S6b: Verfahrensstufe
- S7a, S7b, S7c: Verfahrensstufe

## Patentansprüche

1. Verfahren zum Betreiben eines, insbesondere wenigstens teilweise autonom und bevorzugt autonom betreibbaren und/oder betriebenen, Fahrzeugs (1) mit einer Notrufeinrichtung (2) in einem Notfallmodus des Fahrzeugs (1), in welchem das Fahrzeug (1) wenigstens zeitweise in Kommunikationsverbindung mit einer Notrufzentrale ist und in welchem das Fahrzeug (1) als Navigationsziel ein vorgegebenes Rettungsziel aufweist und/oder ansteuert, wobei das vorgegebene Rettungsziel von der Notrufeinrichtung (2) des Fahrzeugs selbst ermittelt wird, **dadurch gekennzeichnet, dass** zwischen dem Fahrzeug (1) und insbesondere der Notrufeinrichtung (2) des Fahrzeugs und der Notrufzentrale ein Austausch von Routendaten erfolgt, welche für eine Navigationsroute von einem Standort des Fahrzeugs (1) zum Rettungsziel charakteristisch sind, wobei zwischen der Notrufeinrichtung einerseits und der Notrufzentrale andererseits in redundanter Weise wenigsten zweimal Daten in Bezug auf das Rettungsziel ausgetauscht werden.

2. Verfahren nach Anspruch 1, **dadurch gekennzeichnet, dass** im Anschluss an eine Übermittlung eines Rettungsziels an das Fahrzeug (1) durch die Notrufzentrale, ein Abgleich des aktualisierten Navigationsziels des Fahrzeugs (1) mit der Notrufzentrale durch Übermittlung des aktualisierten Navigationsziels des Fahrzeugs (1) an die Notrufzentrale erfolgt.

3. Verfahren nach einem der vorhergehenden Ansprüche, **dadurch gekennzeichnet, dass** das Fahrzeug (1) auf Grundlage des vorgegebenen Rettungsziels die Navigationsroute ermittelt.

4. Verfahren nach einem der vorangegangenen Ansprüche, **dadurch gekennzeichnet, dass** die Notrufzentrale die Routendaten wenigstens teilweise an ein mobiles Rettungsmittel (4) übermittelt.

5. Verfahren nach dem vorangegangenen Anspruch, **dadurch gekennzeichnet, dass** ein Anhalten des Fahrzeugs (1) durch einen Datenaustausch zwischen dem Fahrzeug (1) und dem Rettungsmittel und/oder der Notrufzentrale ausgelöst und/oder bewirkt wird.

6. Verfahren nach einem der vorangegangenen Ansprüche, **dadurch gekennzeichnet, dass** zur Entriegelung des Fahrzeugs (1) Autorisierungsdaten von dem Fahrzeug (1) an die Notrufzentrale und/oder an das Fahrzeug (1) übermittelt werden.

7. Verfahren nach einem der beiden vorangegangenen Ansprüche, **dadurch gekennzeichnet, dass** die zum Anhalten und/oder zur Entriegelung des Fahrzeugs (1) über eine direkte Kommunikationsverbindung zwischen dem Rettungsmittel und dem Fahrzeug (1) ausgetauscht werden.

8. Verfahren nach einem der vorangegangenen Ansprüche, **dadurch gekennzeichnet, dass** das Fahrzeug (1) zur Ankunft am Rettungsziel Hinweissignale zur Ausgabe und/oder zur Übermittlung, insbesondere an eine Rettungsstelle, bereitstellt.

9. Notrufeinrichtung (2) für ein, insbesondere wenigstens teilweise autonom und bevorzugt autonom betreibbares und/oder betriebenes, Fahrzeug (1) zum Betrieb in einem Notfallmodus, in welchem wenigstens zeitweise zwischen der Notrufeinrichtung (2) und einer Notrufzentrale eine Kommunikationsverbindung durch das Fahrzeug (1) hergestellt wird und in welchem als Navigationsziel für das Fahrzeug (1) ein Rettungsziel vorgegeben ist, wobei das vorgegebene Rettungsziel von der Notrufeinrichtung (2) des Fahrzeugs selbst ermittelt wird, **dadurch gekennzeichnet, dass** die Notrufeinrichtung (2) dazu konfiguriert ist, mit der Notrufzentrale Routendaten auszutauschen, welche für eine Navigationsroute von einem Standort des Fahrzeugs (1) zum Rettungsziel charakteristisch sind, wobei zwischen der Notrufeinrichtung einerseits und der Notrufzentrale andererseits in redundanter Weise wenigsten zweimal Daten in Bezug auf das Rettungsziel ausgetauscht werden.

10. Fahrzeug (1), insbesondere Kraftfahrzeug, umfassend eine Notrufeinrichtung (2) gemäß dem vorhergehenden Anspruch.

## Claims

1. Method for operating a vehicle (1), in particular an at least partially autonomously, and preferably autonomously, operable and/or operated vehicle, comprising an emergency call device (2), in an emergency mode of the vehicle (1), in which emergency mode the vehicle (1) is at least temporarily communicatively linked with an emergency call center and in which emergency mode the vehicle (1) has and/or drives toward a specified rescue destination as a navigation destination, the specified rescue destination being determined by the emergency call device (2) of the vehicle itself, **characterized in that** route data are exchanged between the vehicle (1) and in particular the emergency call device (2) of the vehicle and the emergency call center, which data are characteristic of a navigation route from a location of the vehicle (1) to the rescue destination, data relating to the rescue destination being exchanged redundantly at least twice between the emergency call device and the emergency call center.

2. Method according to claim 1, **characterized in that,** following the transmission of a rescue destination to the vehicle (1) by the emergency call center, a comparison of the updated navigation destination of the vehicle (1) with the emergency call center is carried out by transmitting the updated navigation destination of the vehicle (1) to the emergency call center.

3. Method according to any of the preceding claims, **characterized in that** the vehicle (1) determines the navigation route on the basis of the specified rescue destination.

4. Method according to any of the preceding claims, **characterized in that** the emergency call center transmits the route data at least partially to a mobile means of rescue (4).

5. Method according to the preceding claim, **characterized in that** the vehicle (1) is prompted and/or caused to stop by a data exchange between the vehicle (1) and the means of rescue and/or the emergency call center.

6. Method according to any of the preceding claims, **characterized in that,** in order to unlock the vehicle (1), authorization data are transmitted from the vehicle (1) to the emergency call center and/or to the vehicle (1).

7. Method according to either of the two preceding claims,
**characterized in that** the for stopping and/or unlocking the vehicle (1) are exchanged via a direct communication link between the means of rescue and the vehicle (1).

8. Method according to any of the preceding claims, **characterized in that,** for arrival at the rescue destination, the vehicle (1) provides warning signals for output and/or for transmission, in particular to a rescue point.

9. Emergency call device (2) for a vehicle (1), in particular an at least partially autonomously, and preferably autonomously, operable and/or operated vehicle for operation in an emergency mode, in which emergency mode a communication link is at least temporarily established by the vehicle (1) between the emergency call device (2) and an emergency call center and in which emergency mode a rescue destination is specified as a navigation destination for the vehicle (1), the specified rescue destination being determined by the emergency call device (2) of the vehicle itself,
**characterized in that** the emergency call device (2) is configured to exchange route data with the emergency call center, which data are characteristic of a navigation route from a location of the vehicle (1) to the rescue destination, data relating to the rescue destination being exchanged redundantly at least twice between the emergency call device and the emergency call center.

10. Vehicle (1), in particular a motor vehicle, comprising an emergency call device (2) according to the preceding claim.

## Revendications

1. Procédé pour faire fonctionner un véhicule (1), pouvant fonctionner et/ou fonctionnant en particulier de manière au moins partiellement autonome et de préférence de manière autonome, comportant un dispositif d'appel d'urgence (2) dans un mode d'urgence du véhicule (1), dans lequel le véhicule (1) est au moins temporairement en liaison de communication avec une centrale d'appel d'urgence et dans lequel le véhicule (1) présente et/ou se dirige vers une destination de sauvetage prédéfinie comme destination de navigation, dans lequel la destination de sauvetage prédéfinie est déterminée par le dispositif d'appel d'urgence (2) du véhicule lui-même, **caractérisé en ce qu'**entre le véhicule (1) et en particulier le dispositif d'appel d'urgence (2) du véhicule et la centrale d'appel d'urgence a lieu un échange de données d'itinéraire qui sont caractéristiques d'un itinéraire de navigation d'un emplacement du véhicule (1) vers la destination de sauvetage, dans lequel des données concernant la destination de sauvetage sont échangées de manière redondante au moins deux fois entre le dispositif d'appel d'urgence d'une part et la centrale d'appel d'urgence d'autre part.

2. Procédé selon la revendication 1, **caractérisé en ce qu'à** la suite d'une transmission d'une destination de sauvetage au véhicule (1) par la centrale d'appel d'urgence, une comparaison de la destination de navigation actualisée du véhicule (1) avec la centrale d'appel d'urgence est effectuée par transmission de la destination de navigation actualisée du véhicule (1) à la centrale d'appel d'urgence.

3. Procédé selon l'une des revendications précédentes,
**caractérisé en ce que** le véhicule (1) détermine l'itinéraire de navigation sur la base de la destination de sauvetage prédéfinie.

4. Procédé selon l'une des revendications précédentes,
**caractérisé en ce que** la centrale d'appel d'urgence transmet au moins partiellement les données d'itinéraire à un moyen de sauvetage mobile (4).

5. Procédé selon la revendication précédente, **caractérisé en ce qu'**un arrêt du véhicule (1) est déclenché et/ou provoqué par un échange de données entre le véhicule (1) et le moyen de sauvetage et/ou la centrale d'appel d'urgence.

6. Procédé selon l'une des revendications précédentes,
**caractérisé en ce que**, pour déverrouiller le véhicule (1), des données d'autorisation sont transmises par le véhicule (1) à la centrale d'appel d'urgence et/ou au véhicule (1).

7. Procédé selon l'une des deux revendications précédentes,
**caractérisé en ce que** les pour l'arrêt et/ou le déverrouillage du véhicule (1) sont échangés par l'intermédiaire d'une liaison de communication directe entre le moyen de sauvetage et le véhicule (1).

8. Procédé selon l'une des revendications précédentes,
**caractérisé en ce que** le véhicule (1) fournit des signaux d'indication pour l'émission et/ou la transmission, en particulier à un centre de sauvetage, à l'arrivée à la destination de sauvetage.

9. Dispositif d'appel d'urgence (2) pour un véhicule (1), en particulier pouvant fonctionner et/ou fonctionnant de manière au moins partiellement autonome et de préférence de manière autonome, pour le fonctionnement dans un mode d'urgence, dans lequel une liaison de communication est établie au moins temporairement entre le dispositif d'appel d'urgence (2) et une centrale d'appel d'urgence par le véhicule (1) et dans lequel une destination de sauvetage est prédéfinie comme destination de navigation pour le véhicule (1), dans lequel la destination de sauvetage prédéfinie est déterminée par le dispositif d'appel d'urgence (2) du véhicule lui-même, **caractérisé en ce que** le dispositif d'appel d'urgence (2) est configuré pour échanger avec la centrale d'appel d'urgence des données d'itinéraire qui sont caractéristiques d'un itinéraire de navigation depuis un emplacement du véhicule (1) jusqu'à la destination de sauvetage, dans lequel des données relatives à la destination de sauvetage sont échangées de manière redondante au moins deux fois entre le dispositif d'appel d'urgence d'une part et la centrale d'appel d'urgence d'autre part.

10. Véhicule (1), en particulier véhicule automobile, comprenant un dispositif d'appel d'urgence (2) selon la revendication précédente.
